# EUROPEAN PATENT APPLICATION

(11) **EP 2 210 802 A1**
(43) Date of publication of application: **28.07.2010**
(21) Application number: 07832110.6
(22) Date of filing: 19.11.2007
(51) Int. Cl.: B62K 5/08, B62K 21/16, B62M 17/00

(54) **BICYCLE WITH TWO FRONT WHEELS**

(71) Applicant: Land Walker, Ltd., Osaka 533-0031 (JP)
(72) Inventor: KANOU, Kinya, Osaka-shi Osaka 533-0022 (JP)
(74) Representative: Manitz, Finsterwald & Partner GbR
(86) International application number: PCT/JP2007/072380
(87) International publication number: WO 2009/066363

(57) **Abstract**

A bicycle with two front wheels includes: a main frame provided at its front end with a vertically oriented head tube; a pair of front wheels non-rotatably provided on both ends of a front wheel shaft held below the head tube; a rear wheel that is rotatably supported by a rear end of the main frame; driving means for driving the front wheels; and steering means for steering the front wheels. The steering means includes a steering handle, and a steering shaft extending from the steering handle downward and including a vertical steering shaft portion that is rotatably supported by the head tube and that has a lower end for turning the front wheel shaft. The driving means includes a horizontal driving shaft pivotally supported by the main frame, and a vertical driving body that can be rotated by the horizontal driving shaft and that is coaxial with the head tube, and the vertical driving body rotates the front wheel shaft through driving-interconnection means.

## Description

### Technical Field

The present invention relates to a bicycle with two front wheels in which a driving force generated by pedaling is transmitted to front wheels, and the front wheels that are steered wheels are used as driving wheels.

### Background Art

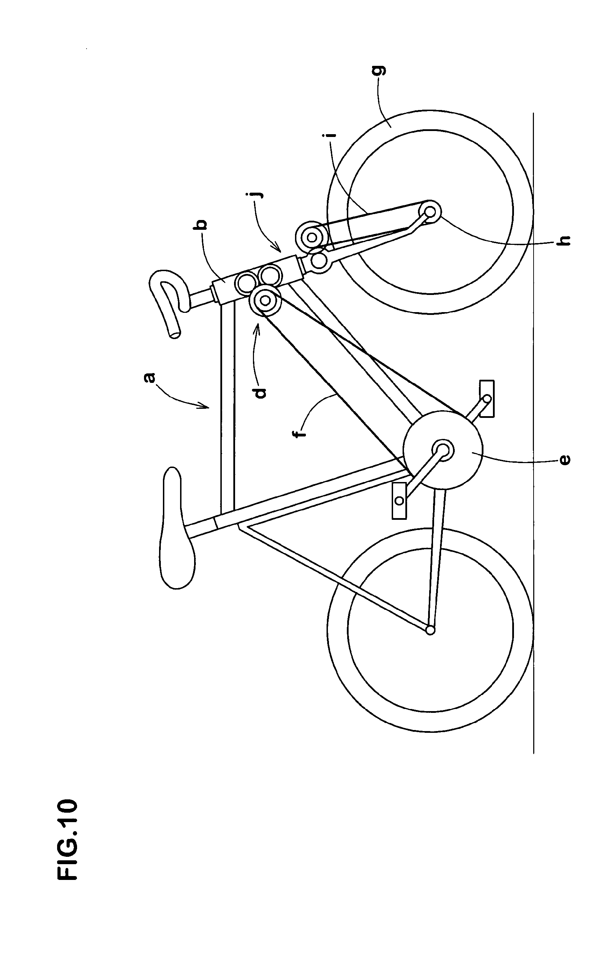

If a bicycle runs while transmitting a driving force to a front wheel that is a steered wheel, the bicycle corners stably. Therefore, bicycles having front wheel-driving mechanisms are proposed. There is proposed a front-wheel drive bicycle as shown in Fig. 10 for example. According to this front-wheel drive bicycle, a head rack b is provided on a front portion of a main frame a, a steering-rotation type driving force power-transmitting mechanism d is provided on the head rack b, the steering-rotation type driving force power-transmitting mechanism d and a chain ring e are connected with each other through a first gearing chain f, a free wheel h is provided on a rotation shaft of the front wheel g, the free wheel h and the steering-rotation type driving force power-transmitting mechanism d are connected with each other through a second gearing chain i, a rotation driving force given to the chain ring e is transmitted through the first gearing chain f, the steering-rotation type driving force power-transmitting mechanism d and the second gearing chain i, and the rotation driving force given to the chain ring e can be transmitted as a rotation driving force for a front wheel g (see patent document 1 for example).

This front-wheel drive bicycle can run by driving the front wheel g by the rotation driving force of the chain ring e while keeping a state where a front wheel steering portion j can rotate around its axis. Therefore, the bicycle can stably corner on level ground without deceleration.
See Japanese Unexamined Patent Application Publication No. 2002-337781.

### Disclosure of the Invention

### Technical Problems to be Solved

When the bicycle treads on a bump while running on a bumpy road, especially when the bicycle diagonally treads on the bump, there is a problem that the front wheel g is flicked off and a steering handle is prone to be uncontrollable and as a result, a steering direction is deviated from the treading direction and it becomes difficult to tread the bump. Further, since the direction of the driving force is abruptly changed, there is a high risk that the bicycle whose centre of gravity is set relatively high loses its balance and topples over.

Since a heavy load such as friction and twist is put on a tire of the front wheel g that is steered while being driven, frequency of a trouble such as blowout is high. Further, when a tire blowout occurs, since the steering performance is abruptly lost and rotation is continued, a risk of an accident such as roll-over and collision is high.

Based on a bicycle having a pair of front wheels that are non-rotatably provided on both ends of a front wheel shaft held below the head tube, in which a vertical driving body that is coaxial with the head tube rotates the front wheel shaft through driving-interconnection means, it is an object of the present invention to provide a bicycle with two front wheels that has excellent bump-treading performance and high safety and that can corner sharply.

### Means to Solve the Problems

To achieve the above object, an invention of claim 1 provides a bicycle with two front wheels including: a main frame provided at its front end with a vertically oriented head tube; a pair of front wheels non-rotatably provided on both ends of a front wheel shaft held below the head tube; a rear wheel that is rotatably supported by a rear end of the main frame; driving means for driving the front wheels; and steering means for steering the front wheels; wherein: the steering means includes a steering handle, and a steering shaft extending from the steering handle downward and including a vertical steering shaft portion that is rotatably supported by the head tube and that has a lower end for turning the front wheel shaft, and the driving means includes a horizontal driving shaft pivotally supported by the main frame, and a vertical driving body that can be rotated by the horizontal driving shaft and that is coaxial with the head tube, and the vertical driving body rotates the front wheel shaft through driving-interconnection means.

According to an invention of claim 2, the vertical steering shaft portion of the steering means is rotatably supported by the head tube and extends downward beyond the head tube, the vertical driving body is of a straight-tube shape, the vertical steering shaft portion is inserted into the vertical driving body, and the vertical driving body is rotatably supported by the vertical steering shaft portion. In an invention of claim 3, the vertical steering shaft portion includes a projection having a lower end projecting from the vertical driving body, and a bearing box that rotatably supports the front wheel shaft is mounted on the projection.

According to an invention of claim 4, the driving means includes a driving toothed rotating body provided on the horizontal driving shaft and a relay rotating body, and the relay rotating body is integrally provided with a driven toothed rotating body that is interconnected with the driving toothed rotating body through an endless chain belt and that is pivotally supported by a horizontal spindle provided on the head tube, and a first driving bevel gear that meshes with a first driven bevel gear provided on an upper end of the vertical driving body.

According to an invention of claim 5, the driving-interconnection means includes a second driving bevel gear provided on a lower end of the vertical driving body, and a second driven bevel gear that meshes with the second driving bevel gear and that is provided on one end of the front wheel shaft. In an invention of claim 6, the steering shaft includes the vertical steering shaft portion and an upper steering shaft portion that is connected to the vertical steering shaft portion through a universal joint, and is supported by angle adjusting means that can adjust an angle of the upper steering shaft portion and that can fix the upper steering shaft portion at any angle.

According to an invention of claim 7, the head tube, the vertical steering shaft portion and the vertical driving body are vertically formed.
In an invention of claim 8, the head tube, the vertical steering shaft portion and the vertical driving body are tilted rearward at the same tilting angle. In an invention of claim 9, a distance between wheel center lines of the pair of front wheels is in a range of 50 to 200 mm.

### Effect of the Invention

In the invention of claim 1, the front wheels are driven by the driving means simultaneously when the front wheels are steered by the steering means. Therefore, the steering direction is not limited, and the steering handle can be operated into any direction in a range of 360°. Since the front wheels that are steered wheels are driven, steering performance is high, and it is possible to easily move the bicycle sideways slightly, and to drive the bicycle precisely. Therefore, this bicycle can preferably be used as a bicycle that is used by an aged person and a disability person for moving and that is capable of running at low speed and capable of turning sharply. Since the pair of front wheels are provided on the both ends of the front wheel shaft in parallel to each other, the bicycle has excellent bump-treading performance that permits the bicycle to smoothly run on a badly bumpy road surface. Especially when the bicycle diagonally treads on the bump and one of the front wheels comes into contact with the bump, it is possible to reliably prevents the other front wheel that is not in contact with the bump from slipping laterally, and the one front wheel can stably tread on the bump without being flicked off by the bump. Next, the one front wheel that treaded on the bump first rotates and reliably comes into contact with the ground and the lateral slip is reliably prevented. Therefore, the other front wheel can also tread through the bump smoothly without being flicked off by the bump. In addition, even when one of the front wheels is punctured, the other front wheel keeps running as a driving steered wheel, the bicycle is prevented from toppling over and a level of safety is high.

In the invention of claim 2, the vertical driving body is of a straight-tube shape, the vertical steering shaft portion is inserted into the vertical driving body, and the vertical driving body is rotatably supported by the vertical steering shaft portion. Since the vertical driving body transmits a driving force in the vertical direction through the left and right center lines of the bicycle body, shake and vibration of the bicycle body by drive transmission can be suppressed, the structure is simplified and thus, the weight of the bicycle body can be reduced.

If a bearing box that rotatably supports the front wheel shaft is mounted on the project that projects from the vertical driving body of the vertical steering shaft portion as in the invention of claim 3, the vertical steering shaft portion is rotated by the steering handle operation, and the pair of front wheels provided on the both ends of the front wheel shaft can reliably be steered.

In the invention of claim 4, the bicycle uses the driving means including the relay rotating body, and the relay rotating body is integrally provided with a driven toothed rotating body that is interconnected with the driving toothed rotating body and that is pivotally supported by a horizontal spindle provided on the head tube, and the first driving bevel gear that meshes with the first driven bevel gear provided on the upper end of the vertical driving body. With this, the drive transmitting mechanism can be simplified and it is possible to form a high efficient driving means in which transmission loss is reduced.

In the invention of claim 5, the driving-interconnection means includes the second driving bevel gear provided on the lower end of the vertical driving body, and the second driven bevel gear that meshes with the second driving bevel gear and that is provided on one end of the front wheel shaft. With this, a driving force of the vertical driving body can smoothly be transmitted to the front wheel shaft without loss. If a driving force is transmitted to the second driven bevel gear disposed on the side of one end of the front wheel shaft, a twisting force is generated against the steering shaft especially when depressing the pedals at the time of starting, but since the pair of front wheels come into contact with a road surface, the steering shaft is not rotated by the twisting force. Therefore, stable steering performance can be maintained without exerting an influence on the operation of the steering handle.

If the steering shaft includes the vertical steering shaft portion and the upper steering shaft portion connected to the vertical steering shaft portion through the universal joint and supported by the angle adjusting means as in the invention of claim 6, a position of the steering handle can be adjusted to the optimal position in accordance with a physique or sex of a rider, and the rider can run in safety without fatigue. If the head tube, the vertical steering shaft portion and the vertical driving body are vertically formed as in the invention of claim 7, the steering handle can be operated lightly in any direction including a steering angle exceeding 90°. Therefore, even a weak rider such as an aged person can easily use the bicycle.

If the head tube, the vertical steering shaft portion and the vertical driving body are tilted rearward at the same gentle tilting angle in a range of 5 to 10° as in the invention of claim 8, when the steering handle is turned, since outer one of the front wheels when the bicycle corners floats up in accordance with the turned angle of the steering handle, the bicycle can smoothly corner without using a differential gear. Since the two wheels come into contact with the ground when running straightly as described above, it is possible to prevent a case where the steering handle is brought into uncontrollable state due to influence of a twisting force generated in the steering shaft when depressing the pedals. Further, since the tilting angle is 10° or less, a caster angle of the vertical steering shaft portion is also formed as small as 10° or less, and a light steering handle operation performance at the time of running is not deteriorated.

If the distance of the wheel center line between wheel center lines of the pair of front wheels is in the range of 50 to 200 mm as in the invention of claim 9, slipping at the time of cornering can be suppressed to a small level. Therefore, the steering handle can be operated lightly as light as that of a bicycle with one front wheel of thick size without using a complicated differential gear.

### Brief Description of Drawings

FIG. 1 is a front view showing one embodiment of the present invention;
FIG. 2 is a side view thereof;
FIG. 3 is a cross sectional view taken along the line A-A in FIG. 2;
FIG. 4 is an enlarged view of an essential portion thereof;
FIG. 5 is a vertical cross sectional view of an essential portion thereof;
FIG. 6 is an enlarged view of an essential portion for explaining its using state;
FIG. 7(A) is a substantially plan view for explaining a straight-ahead running state, FIG. 7(B) is a substantially plan view for explaining a state in which a bicycle corners at an angle of about 90°, and FIG. 7(C) is a substantially plan view for explaining a backward running state;
FIG. 8 is a front view showing another embodiment;
FIG. 9 is a front view showing further another embodiment; and
FIG. 10 is a front view of a conventional example.

### Brief Description of Numerals

- 1: bicycle with two front wheel
- 2: head tube
- 3: main frame
- 4: front wheel shaft
- 5: front wheel
- 6: rear wheel
- 7: driving means
- 8: steering means
- 9: steering handle
- 10: vertical steering shaft portion
- 11: steering shaft
- 12: horizontal driving shaft
- 13: vertical driving body
- 14: driving-interconnection means
- 15: projection
- 16: bearing box
- 17: driving toothed rotating body
- 18: endless chain belt
- 19: horizontal spindle
- 20: driven toothed rotating body
- 21: first driven bevel gear
- 22: first driving bevel gear
- 23: relay rotating body
- 24: second driving bevel gear
- 25: second driven bevel gear
- 26: universal joint
- 27: angle adjusting means
- 28: upper steering shaft portion

### Best Mode for Carrying Out the Invention

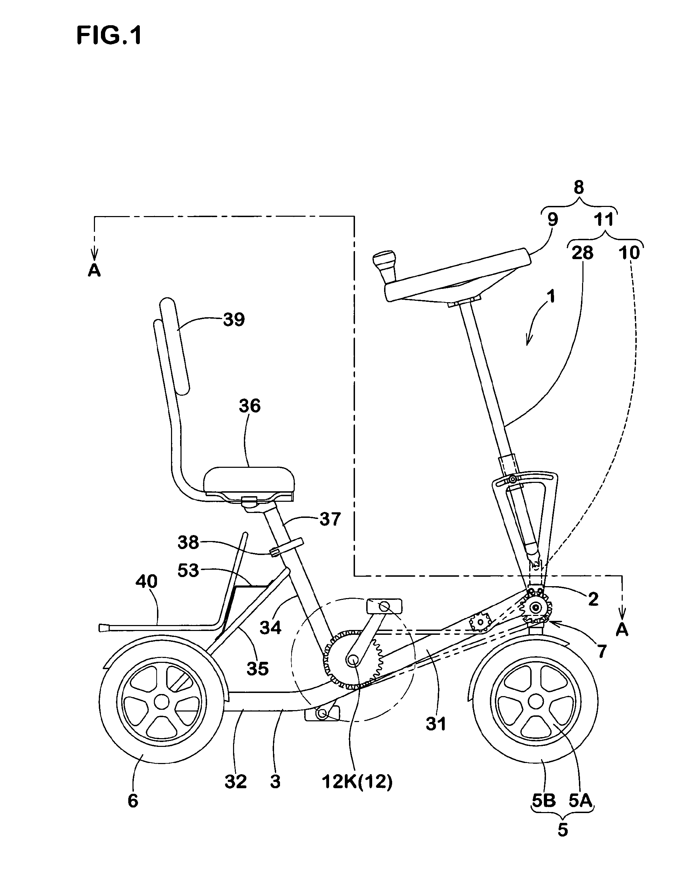

An embodiment of the present invention will be described with an illustrated example. As shown in FIG. 1, a bicycle 1 with two front wheels (two-front wheeled bicycle 1, hereinafter) includes a main frame 3, front wheels 5, rear wheels 6, driving means 7 and steering means 8.

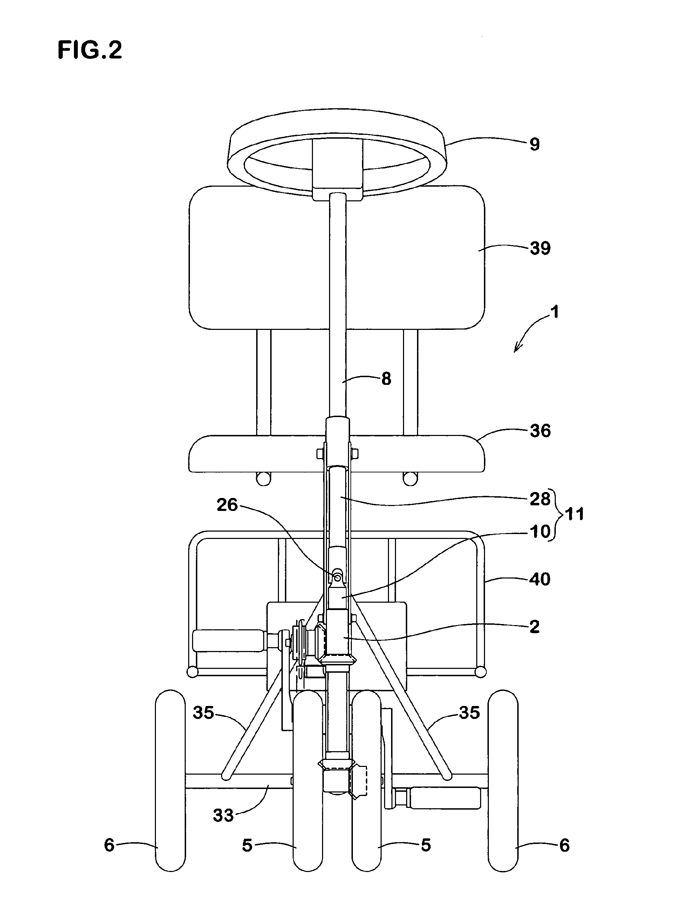

As shown in FIGS. 1 and 2, the main frame 3 includes a head tube 2 that is oriented vertically at the front end of the main frame 3, a down tube 31 extending rearward from the head tube 2 while gently tilting downward, a back tube 32 integrally extending rearward from a rear end of the down tube 31, a laterally extending horizontal rear tube 33 having a central portion fixed to a rear end of the back tube 32, a saddle pipe 34 tilting rearward from a rear end area of the down tube 31 such as to stand therefrom, and a pair of reinforcing tubes 35 extending between an upper end area of the saddle pipe 34 and both end areas of the rear tube 33 in a reversed-V form. In this embodiment, the head tube 2 is formed vertically.

A bench-like saddle 36 is mounted on an upper end of a saddle post 37, and the saddle post 37 is fitted into the saddle pipe 34 of the embodiment. Therefore, a height of the saddle 36 can freely be adjusted in accordance with a physique of a rider, and the height of the saddle 36 after adjusted is fixed by a screw-type fastening tool 38 provided on an upper end of the saddle pipe 34. The saddle 36 of the embodiment is provided at its rear side with a backrest 39 that stands upward. A substantially L-shaped rack 40 fixed to the reinforcing tubes 35 through a bracket 53 below the saddle 36.

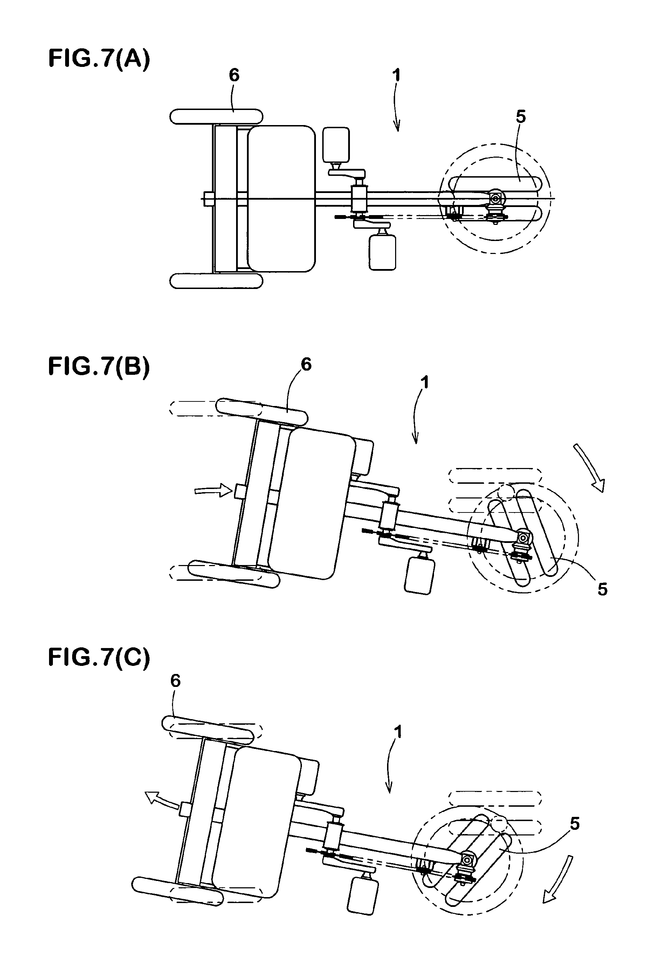

In this embodiment, there are two rear wheels 6, axles extending inward from center points thereof are supported by bearings (not shown) provided on both ends of the rear tube 33 such that the axles can rotate independently from each other. This design is preferable because when the bicycle corners laterally as shown in FIGS. 7(B) and (C), a rotation speed of outer one of the rear wheels 6 in the cornering motion increases and the bicycle can run smoothly without slipping, and with the two laterally separated wheels, the bicycle can run in safety while stably supporting a load including a centrifugal force caused when cornering. The number of rear wheels 6 may be one, or three or more of course.

The steering means 8 includes a steering shaft 11 that is turnably supported by the head tube 2 and a steering handle 9 mounted on an upper end of the steering shaft 11. The steering shaft 11 includes an upper steering shaft portion 28 and a vertical steering shaft portion 10 connected to a lower portion of the upper steering shaft portion 28.

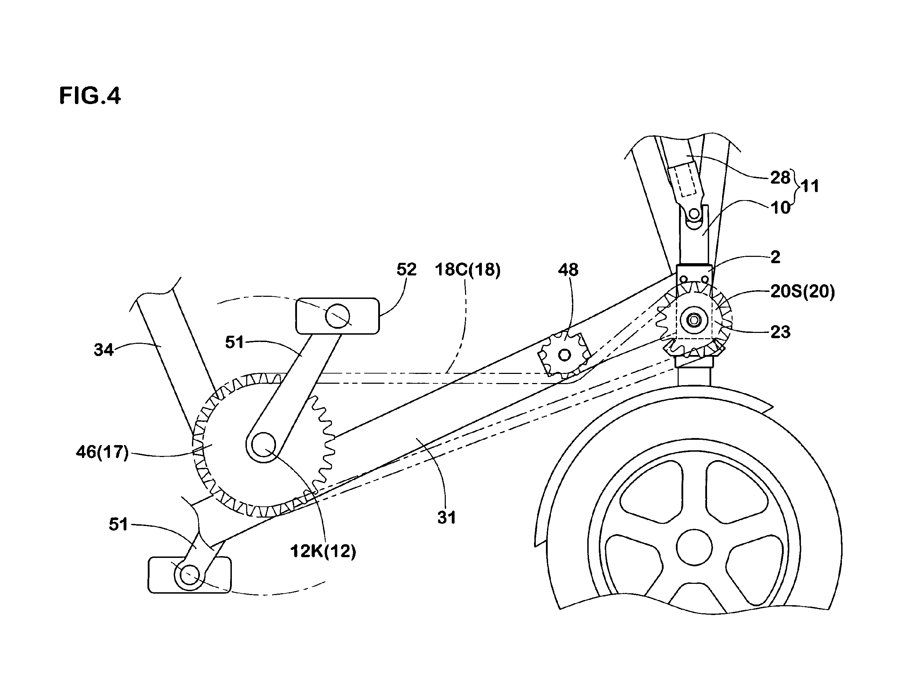

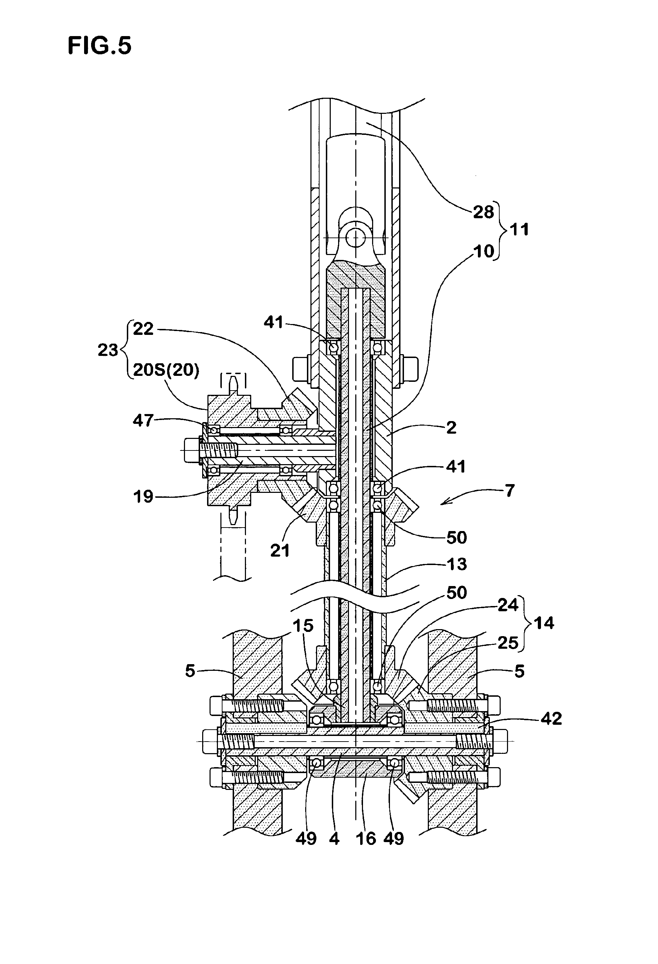

As shown in FIG. 5, the vertical steering shaft portion 10 is inserted into the head tube 2, and is turnably supported by bearings 41 provided on upper and lower ends of the head tube 2. As shown in FIGS. 2 and 4, the vertical steering shaft portion 10 of the embodiment is supported vertically, further extends downward from the head tube 2, and a horizontal cylindrical bearing box 16 is mounted on a lower end of the vertical steering shaft portion 10. A front wheel shaft 4 is inserted through the bearing box 16, and the front wheel shaft 4 is rotatably supported by the bearing box 16 through bearings 49 provided on both ends of the bearing box 16. An axial direction of the front wheel shaft 4 is turned in an interlocking manner with rotation of the vertical steering shaft portion 10.

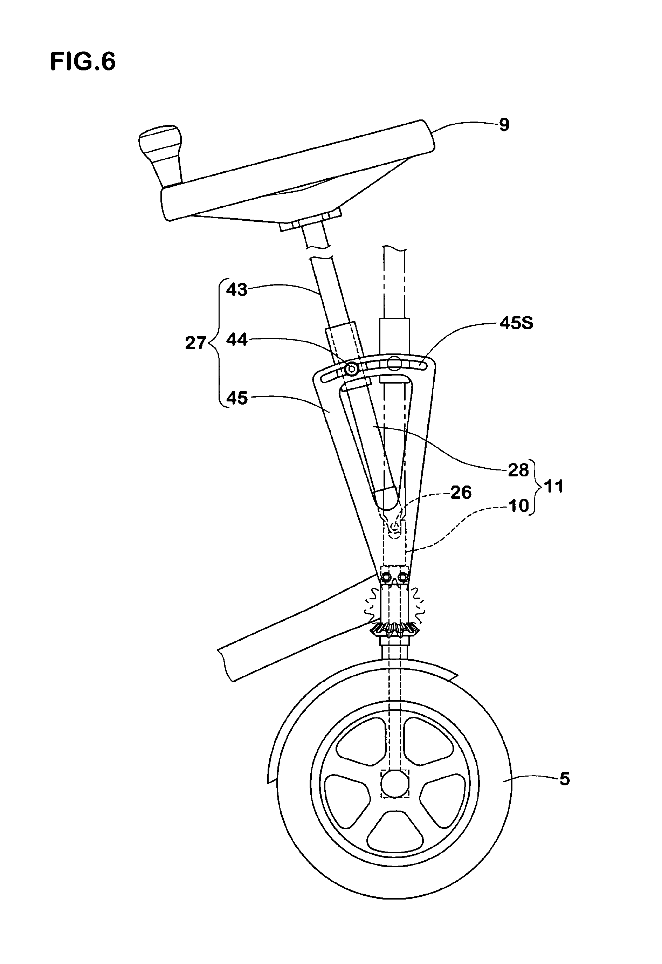

As shown in FIGS. 2 and 6, a ring-like steering handle 9 is mounted on an upper end of the upper steering shaft portion 28, and a lower end of the upper steering shaft portion 28 is connected to an upper end of the vertical steering shaft portion 10 through a universal joint 26. Therefore, even if inclination of the upper steering shaft portion 28 with respect to the vertical steering shaft portion 10 is changed, its rotation can smoothly be transmitted to the vertical steering shaft portion 10. The upper steering shaft portion 28 is fitted over the support sleeve 43. The support sleeve 43 is detachably fixed to the upper steering shaft portion 28 through a screw-type stop 44. The stop 44 passes through an arc slit 45S that is formed around a connection of the universal joint 26. As shown in FIG. 6, the inclination of the upper steering shaft portion 28 can be adjusted by loosening the stop 44, and a position of the steering handle 9 can be adjusted to the optimal position in accordance with a physique or sex of a rider by fastening the stop 44 at the optimal angle. This structure is preferable because even if a rider uses the bicycle for a long time, he or she can ride in safety without fatigue. The support sleeve 43, the stop 44 and an arc frame 45 having the slit 45S constitute angle adjusting means 27.

Each of the front wheels 5 is formed by attaching a tire 5B to a wheel 5A. The pair of front wheels 5 are mounted on both ends of the front wheel shaft 4. The front wheel shaft 4 is fitted into a mounting hole formed in a center of the wheel 5A, a key 42 is hammered into this fitted portion and thus, the pair of front wheels 5 turn in unison with the front wheel shaft 4. Further, since the front wheel shaft 4 is supported by the bearing box 16, the axial direction of the front wheel shaft 4 and directions of the pair of front wheels 5 are varied by rotation of the vertical steering shaft portion 10, and a rider can steer. As shown in FIG. 5, a second driven bevel gear 25 extending along an inner side of one of the front wheels 5 is fitted over a portion of the front wheel shaft 4 extending from the bearing box 16. The key 42 is continuously hammered into the fitted portion, and the second driven bevel gear 25 turns in unison with the front wheel shaft 4 and the front wheels 5.

The driving means 7 includes a horizontal driving shaft 12 pivotally supported by the main frame 3, and a vertical driving body 13 that rotates the front wheel shaft 4 through the driving-interconnection means 14. In this embodiment, the driving means 7 further includes a driving toothed rotating body 17 provided on the horizontal driving shaft 12, and a relay rotating body 23 that is provided on the head tube 2 for transmitting a rotation force to the head tube 2.

The horizontal driving shaft 12 includes a crankshaft 12K that is pivotally supported by a rear end of the down tube 31. The driving toothed rotating body 17 includes a chain ring 46 fixed to the crankshaft 12K. A belt pulley that meshes with a toothed belt can be used as the driving toothed rotating body 17. Driving means 7 having a shaft driving mechanism can also be used as the driving toothed rotating body 17. A pair of cranks 51 extending in opposite directions from each other are mounted on both ends of the crankshaft 12K, and pedals 52 are mounted on tip ends of the cranks 51.

As shown in FIGS. 4 and 5, the relay rotating body 23 is formed by integrally fitting a driven toothed rotating body 20 including a concentric sprocket 20S and a first driving bevel gear 22 to each other. A horizontal spindle 19 projecting toward a side of the head tube 2 is inserted into the relay rotating body 23, and the relay rotating body 23 is rotatably supported by a bearing 47 disposed in the relay rotating body 23. In a bicycle that is required to be compact, it is preferable to use the relay rotating body 23 in which the driven toothed rotating body 20 and the first driving bevel gear 22 are integrally formed because a drive transmitting mechanism can be simplified. Loss of drive transmission is reduced, and a high performance frisky bicycle having small vibration can be obtained.

As shown in FIG. 4, an endless chain belt 18 having an endless chain 18C is wound between a sprocket 20S and the chain ring 46, and rotation of the chain ring 46 is transmitted to the relay rotating body 23. The endless chain 18C is engaged with an auxiliary sprocket 48 provided on a side of the down tube 31 so that the endless chain 18C is not loosened. In addition to the endless chain 18C, an endless toothed belt can be used as the endless chain belt 18.

The vertical driving body 13 is of perfect cylindrical shape, the vertical steering shaft portion 10 is inserted into the vertical driving body 13 below the head tube 2, and the vertical driving body 13 is vertically disposed at a position concentric with the head tube 2 and the vertical steering shaft portion 10. The vertical driving body 13 is rotatably supported by the vertical steering shaft portion 10 through bearings 50 provided on upper and lower ends of the vertical driving body 13. The vertical driving body 13 that rotates at high speed or abruptly accelerates is disposed on a lateral center axis of the main frame 3 so that a driving force is vertically transmitted. Since shake and vibration of a body of the bicycle caused by rotation can be suppressed, a smooth running condition and riding comfort can be obtained. Since the structure of the bicycle is simplified, a weight of the bicycle is reduced, and its handling performance is enhanced. The vertical steering shaft portion 10 includes a projection 15 having a lower end projecting downward from the vertical driving body 13, and the bearing box 16 is mounted on the projection 15.

A first driven bevel gear 21 is fitted to an upper portion of the vertical driving body 13 such that a teeth surface of the first driven bevel gear 21 is oriented upward, and a second driving bevel gear 24 is fitted to a lower portion of the vertical driving body 13 such that a tooth surface of the second driving bevel gear 24 is oriented downward. The first driven bevel gear 21 meshes with the first driving bevel gear 22 to transmit rotation of the relay rotating body 23 to the vertical driving body 13. The second driving bevel gear 24 meshes with the second driven bevel gear 25. Both of the bevel gears constitute the driving-interconnection means 14 that transmits rotation of the vertical driving body 13 to the front wheel shaft 4. The bicycle includes the driving-interconnection means 14, and the driving force can be transmitted using the bevel gears at upper and lower ends of the vertical driving body 13. This structure is preferable because loss of the driving force is suppressed and rotation can be transmitted smoothly.

Since the driving means 7 has the above-described structure, a rotation driving force generated when a rider works the pedals 52 is transmitted from the chain ring 46 to the sprocket 20S of the relay rotating body 23 through the endless chain 18C, and the vertical driving body 13 is rotated and driven through the first driven bevel gear 21 that meshes with the first driving bevel gear 22. Rotation of the vertical driving body 13 is transmitted to the front wheel shaft 4 through the driving-interconnection means 14, the pair of front wheels 5 that are integrally mounted on the front wheel shaft 4 are simultaneously driven and the bicycle can run.

Since the pair of parallel front wheels 5 are driven by the same rotation forces and run on a road surface and the bicycle has excellent bump-treading performance, even when running on badly bumpy road under bad conditions, the bicycle can smoothly run in safety. When the bicycle runs diagonally forward right with respect to a bump, the right front wheel 5 first comes into contact with the bump and receives a pushing-back resistance, but since the left front wheel 5 that has not yet reached the bump rotates on a flat road surface, lateral slip is prevented, the right front wheel 5 is pushed up and therefore, the right front wheel 5 can stably tread on the bump without being flicked off by the bump. Next, the right front wheel 5 that first treaded on the bump rotates and reliably comes into contact with the road surface on the bump and the lateral slip is prevented. Therefore, the left front wheel 5 can also tread through the bump smoothly without being flicked off by the bump.

According to the embodiment, as described above, since a driving force from the vertical driving body 13 is transmitted to the second driven bevel gear 25 provided on the one end of the front wheel shaft 4 horizontally extending from the bearing box 16, when stepping on the pedals 52 at the time of start, a twisting force is generated in the steering shaft 11, the steering handle 9 is twisted and the steering operation is prone to become unstable. However, since the pair of front wheels 5 come into contact with a road surface, it is possible to avoid a case where the steering shaft 11 is rotated by the twisting force. Thus, when the bicycle starts in the straight running state as shown in FIG. 7(A), the bicycle can start straightly without exerting an influence on the operation of the steering handle, and stable steering performance can be maintained throughout the subsequent running operation. When one of the front wheels 5 is punctured, the other front wheel 5 keeps running as a driving steered wheel, the bicycle is prevented from toppling over and a level of safety is high.

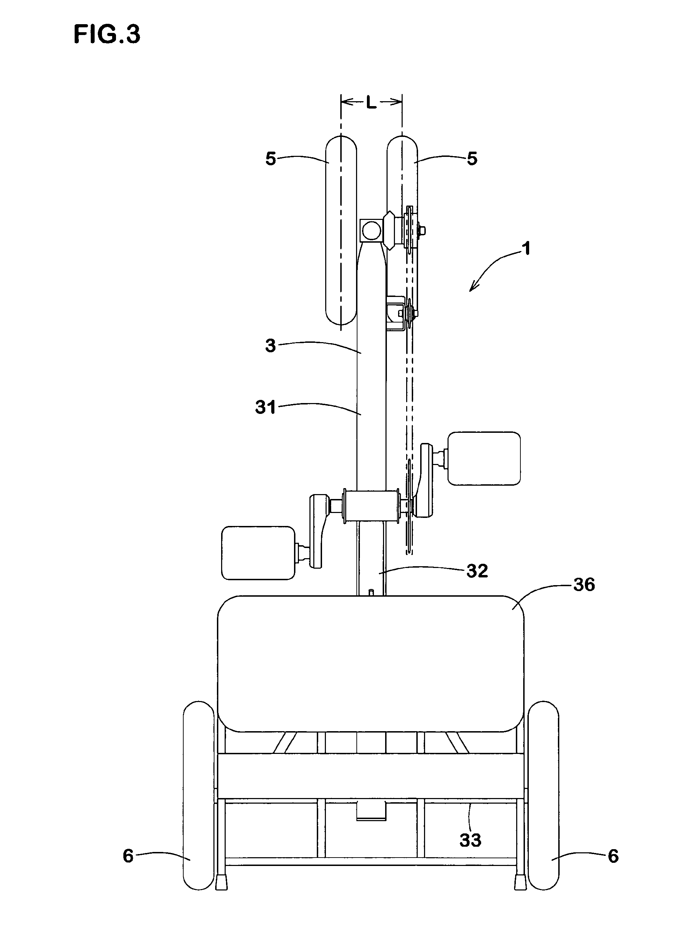

In this embodiment, as shown in FIG. 3, a distance L between wheel center lines of the pair of front wheels 5 is set to 50 to 200 mm, and preferably to 70 to 150 mm. If the distance L is less than 50 mm, the bump-treading performance and a twisting-suppressing effect of the steering shaft 11 can not sufficiently be exhibited, and a space in which the bearing box 16, the driving-interconnection means 14 and the like are accommodated become insufficient. If the distance L exceeds 200 mm, a difference in rotation speed between an outer front wheel 5 and an inner front wheel 5 of the cornering motion is increased at the time of cornering, slip is generated on the grounding road surface, and the steering operation becomes unstable.

As described above, in the embodiment, the head tube 2, the vertical steering shaft portion 10 and the vertical driving body 13 are vertically formed. Thus, even if a cornering angle is as sharp as about 90° as shown in FIG. 7(B), the steering handle can lightly be operated, and even a weak rider such as an aged person can easily use the bicycle. By turning the steering handle 9 more than 90° as shown in FIG. 7(C), the front wheels 5 are oriented rearward and driven, and the bicycle can easily run backward.

According to the two-front wheeled bicycle 1, since the front wheels 5 are steered by the steering means 8 and driven by the driving means 7 at the same time, the steering handle can be operated into any direction in a range of 360°. Since the front wheels 5 that are steered wheels are driven, steering performance is excellent, it is possible to easily move the bicycle sideways slightly, and to drive the bicycle precisely. Therefore, this bicycle can preferably be used as a bicycle that is used by an aged person and a disability person for moving and that is capable of running at low speed and capable of turning sharply.

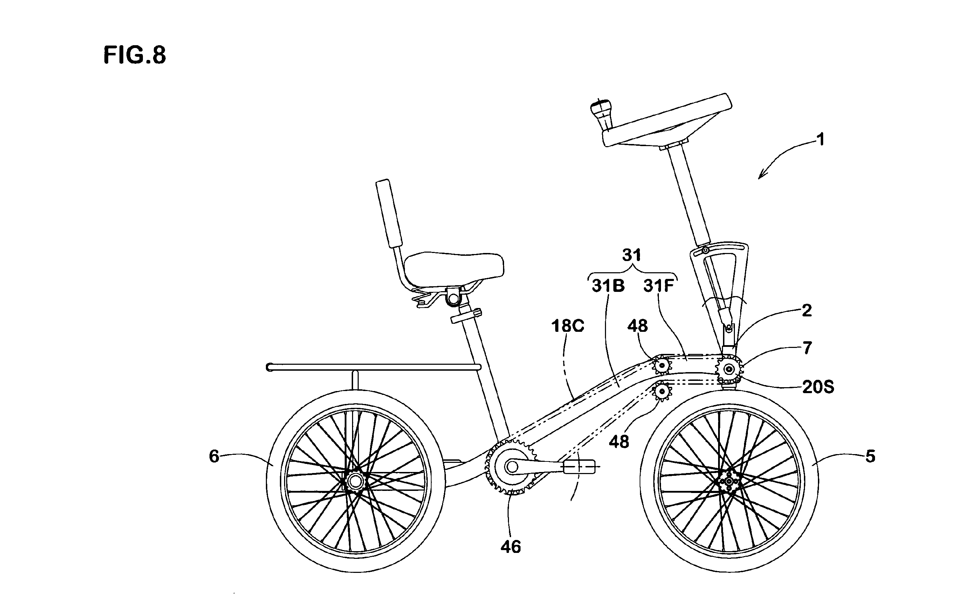

FIG. 8 shows another embodiment. Only different contents will be described, and other portions are designated with the same symbols as those illustrated in the drawings. In the two-front wheeled bicycle 1 of the embodiment, a size of each of the front wheels 5 and the rear wheels 6 is about 20 to 28 inches. Therefore, the head tube 2 is located at a high position. The down tube 31 extending form the head tube 2 rearward includes a front down tube 31F and a rear down tube 31B that extends from a rear portion of the down tube 31F rearward while tilting downward at an angle of about 30 to 40°. The endless chain 18C is engaged with the pair of auxiliary sprockets 48, and wound between the sprocket 20S provided on the head tube 2 and the chain ring 46.

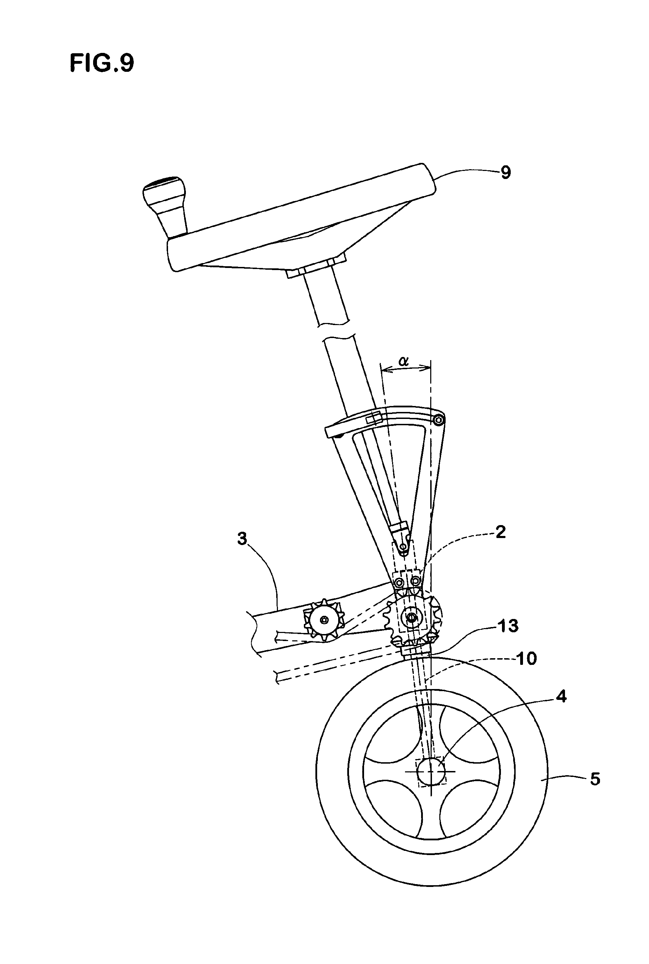

FIG. 9 shows another embodiment. In this embodiment, the head tube 2 on the front end of the main frame 3, the vertical steering shaft portion 10 and the vertical driving body 13 are tilted rearward at the same tilting angle α, and the tilting angle α is in a range of 5 to 10°.

The pair of front wheels 5 are supported by both ends of the front wheel shaft 4 provided on a lower end of the vertical steering shaft portion 10 that tilts rearward at the gentle tilting angle α, and when the steering handle 9 is turned, since outer one of the front wheels 5 floats up in accordance with the turned angle of the steering handle 9, the bicycle is supported only by the inner front wheel 5. As a result, slip is not generated at the ground-contacting portion at the time of cornering, and the bicycle can smoothly corner without using a differential gear. Further, since the tilting angle is 10° or less, a caster angle of the vertical steering shaft portion is also as small as 10° or less, and a light steering handle operation performance at the time of running is not deteriorated.

Inner one of the front wheels 5 on which loads are concentrated when the bicycle corners is prone to go down. Therefore, it is preferable to use a high pressure tire that does not go down deeply as the front wheels 5, thereby securing a floating-up motion of the outer front wheel 5. As described above, since the pair of front wheels 5 come into contact with a road surface when running straightly, it is possible to avoid a case wherein the steering shaft 11 is rotated by a twisting force when depressing the pedals. Therefore, steering handle is not brought into the uncontrollable state.

The above description shows the embodiment of the invention as an example. Therefore, a technical scope of the invention is not limited to the description, and the embodiment also includes various modifications.

## Claims

1. A bicycle with two front wheels comprising:
a main frame provided at its front end with a vertically oriented head tube;
a pair of front wheels non-rotatably provided on both ends of a front wheel shaft held below the head tube;
a rear wheel that is rotatably supported by a rear end of the main frame;
driving means for driving the front wheels; and
steering means for steering the front wheels, wherein
the steering means comprises a steering handle, and a steering shaft extending from the steering handle downward and including a vertical steering shaft portion that is rotatably supported by the head tube and that has a lower end for turning the front wheel shaft, and wherein
the driving means comprises a horizontal driving shaft pivotally supported by the main frame, and a vertical driving body that can be rotated by the horizontal driving shaft and that is coaxial with the head tube, and the vertical driving body rotates the front wheel shaft through driving-interconnection means.

2. The bicycle with two front wheels according to claim 1,
wherein the vertical steering shaft portion of the steering means is rotatably supported by the head tube and extends downward beyond the head tube, the vertical driving body is of a straight-tube shape, the vertical steering shaft portion is inserted into the vertical driving body, and the vertical driving body is rotatably supported by the vertical steering shaft portion.

3. The bicycle with two front wheels according to claim 1 or 2, wherein the vertical steering shaft portion comprises a projection having a lower end projecting from the vertical driving body, and a bearing box that rotatably supports the front wheel shaft is mounted on the projection.

4. The bicycle with two front wheels according to any one of claims 1 to 3, wherein the driving means comprises a driving toothed rotating body provided on the horizontal driving shaft and a relay rotating body, and the relay rotating body is integrally provided with a driven toothed rotating body that is interconnected with the driving toothed rotating body through an endless chain belt and that is pivotally supported by a horizontal spindle provided on the head tube, and a first driving bevel gear that meshes with a first driven bevel gear provided on an upper end of the vertical driving body.

5. The bicycle with two front wheels according to any one of claims 1 to 4, wherein the driving-interconnection means comprises a second driving bevel gear provided on a lower end of the vertical driving body, and a second driven bevel gear that meshes with the second driving bevel gear and that is provided on one end of the front wheel shaft.

6. The bicycle with two front wheels according to any one of claims 1 to 5, wherein the steering shaft comprises the vertical steering shaft portion and an upper steering shaft portion that is connected to the vertical steering shaft portion through a universal joint, and is supported by angle adjusting means that can adjust an angle of the upper steering shaft portion and that can fix the upper steering shaft portion at any angle.

7. The bicycle with two front wheels according to any one of claims 1 to 6, wherein the head tube, the vertical steering shaft portion and the vertical driving body are vertically formed.

8. The bicycle with two front wheels according to any one of claims 1 to 6, wherein the head tube, the vertical steering shaft portion and the vertical driving body are tilted rearward at the same tilting angle.

9. The bicycle with two front wheels according to any one of claims 1 to 8, wherein a distance between wheel center lines of the pair of front wheels is in a range of 50 to 200 mm.
